# EUROPEAN PATENT APPLICATION

(11) **EP 1 354 520 A1**
(43) Date of publication of application: **22.10.2003**
(21) Application number: 03008523.7
(22) Date of filing: 12.04.2003
(51) Int. Cl.: A23K 1/00, A23K 1/16

(54) **Microencapsulated product for animal feeding based on n-butyric acid and its salts and relevant production method**

(30) Priority: 17.04.2002 IT PD20020097
(71) Applicant: SILA S.r.l., 30033 Noale (VE) (IT)
(72) Inventor: Lorenzon, Maurizio, 30033 Noale (VE) (IT)
(74) Representative: Gustorf, Gerhard, Dipl.-Ing.

(57) **Abstract**

The invention concerns a product for animal feeding containing n-butyric acid and its salts and the corresponding production method. The active principle is dispersed in a lipidic structure through a spray cooling system, with the aid of emulsifiers and buffer agents, then it is introduced in rapid cooling chambers, so that the product assumes the shape of roundish microcapsules and microgranules. This new technique makes it possible to obtain a product that prevents the dissociation of n-butyric acid salts in the respective acid, thus blocking its extreme volatility, which is the cause of bad smells and irritations, and therefore allowing operators to use the product with no need to take particular precautions. Furthermore, this form prevents any degradation at gastric level, which may reduce the quantity of active principle administered and guarantees its complete release in the intestine, where it produces its beneficial effects. The product is suitable for feeding all animal species, in the cases in which its use is allowed.

## Description

This patent concerns the sector of animal feedingstuffs and in particular it concerns the production of a new product based on the salts of n-butyric acid, suitable for feeding all animal species, in all the cases in which its use is allowed.

It is known that butyric acid, as indicated in the literature on this subject, has interesting biological effects on the digestive system, in fact it stimulates the growth of the intestinal villi and modifies the development of gastro-enteric micro-organisms.

Butyric acid is a short-chain fatty monocarboxylic acid (with 4 carbon atoms), classified also among volatile fatty acids (VFA) together with acetic acid (chain with 2 carbon atoms) and propionic acid (chain with 3 carbon atoms). Butyric acid has 2 isomers, n-butyric acid and isobutyric acid. At ambient temperature n-butyric acid is fluid and volatile and furthermore it has a characteristic rancid odour.

Its salts, instead, are solid and stable (non-volatile) up to 250° C and white in colour. Depending on the pH of the gastro-intestinal environment, n-butyric acid can be found as undissociated acid or in dissociated form; the undissociated form can be absorbed by the intestinal walls and by the cellular membranes of micro-organisms.

N-butyric acid is produced mainly by carbohydrates (cellulose and starch) of different micro-organisms through fermentation in anaerobic conditions and this process takes place also in the large intestine. After its formation, n-butyric acid is partly metabolised, while the non-metabolised fraction of the undissociated n-butyric acid is absorbed by the large intestine and goes in circulation.

From the data given in the literature on the subject, it emerges that fatty volatile acids may inhibit the growth of Escherichia coli hemolytic strains even by 50% (Galfi P., Neogrady S., 1992).

Among fatty volatile acids, n-butyric acid has the strongest inhibiting power and this increases as the pH decreases, since the biological effect is due to the undissociated form. From studies carried out on the effects of n-butyrate on different strains of micro-organisms of the digestive system (Galfi P., Neogrady S., 1991) it emerged that the decrease in the development of E. coli is due to a direct effect of n-butyric acid and to an increase in the development of lactobacilli. Therefore, the antimicrobial effect of n-butyrate is selective. Other micro-organisms sensible to n-butyrate and to pH are the following: Clostridium acetobutylicum, Escherichia coli, Streptococcus cremoris, Lactococcus lactis and cremoris, Salmonella species. Lactobacillus species and Streptococcus bovis, instead, are less sensible to n-butyrate and pH.

N-butyric acid has a further biological effect and more precisely a stimulating effect on the growth of the wall of the digestive system (Galfi P., Neogrady S., 1991).

These studies are supported by the results obtained from feeding tests that show a higher daily ponderal increase, better utilization of feedingstuffs and decreased mortality.

Besides its high potentials, n-butyric acid presents a considerable drawback for use, determined by its characteristic, unpleasant smell of rancid butter, which makes the feedingstuffs containing it rather undesirable.

The object of this patent application includes a new product obtained from a new treatment of the active principle n-butyric acid associated with other substances and the relevant production method.

The new product achieves the goals described below.

The first aim of the new product is to block the high volatility of n-butyric acid and therefore its malodorous exhalations, which currently are the problem that strongly limits its commercial diffusion in the animal feeding sector, notwithstanding its proven benefits and the fact that is has been present on the market for several years.

Another aim of the invention is to counteract the negative effect that said malodorous exhalations have on the voluntary consumption of feedingstuffs by animals.

Another aim is to avoid the contact of n-butyric acid salts (stable and non-volatile) with the acid substances that may often be present in the raw materials used for feedingstuffs, which cause a dissociative reaction releasing n-butyric acid (volatile and malodorous).

A further aim of the invention is to transport n-butyric acid and its salts directly in the intestine, owing to its microencapsulated form that ensures a *slow releasing* effect, that is, doesn't allow its degradation at gastric level and therefore avoids the reduction of the active principle administered.

A further aim of the invention is to allow n-butyric acid and its salts to be used in the field of feedingstuffs, without forcing operators and firms to adopt special and expensive protection systems against bad smells and irritations.

The new product comprises a core of n-butyric acid and its salts microencapsulated in a lipidic structure, emulsifiers, buffer substances (bicarbonates and calcium, magnesium and potassium carbonates) and natural flavours.

The new product is obtained through a spray-cooling system.

It has been demonstrated that the structure used has the following functions:
1. covering the active principle, reducing in this way its irritating effects and unpleasant smell;
2. protecting the salts of n-butyric acid from any contact with the substances that constitute feedingstuffs and that can start a dissociative reaction;
3. guaranteeing the stability of the product against gastric degradation and
4. guaranteeing a given energy supply.

In the production phase, n-butyric acid powder and its salts are dispersed into the lipidic structure brought to melting temperature, then natural flavours are added, as well as buffer substances (bicarbonates and carbonates) and food emulsifiers that guarantee better dispersion and digestibility of the finished product.

The mixture obtained, which is a dispersion of a solid component into a liquid component, is injected at high pressure into a low-temperature chamber, to guarantee rapid cooling.

In this way the small drops assume the shape of roundish microcapsules, and microgranules, with variable grain size depending on the pressure and the nozzles used in the injection phase. In this physical form the active principle is inside the lipidic structure and protection against external agents is guaranteed, which doesn't happen when it is in the form of powder.

The new product is suitable for feeding all animal species, in all the cases in which its use is allowed.

It can be used as it is, in the quantities recommended in the label applied to the package, for simple, complete, mineral, complementary feedingstuffs, or directly in the feeding trough or through automatic feeders or *unifeed* mixers that are already available on the market and used in the breeding of all animal species, in all the cases in which its use is allowed.

Therefore, with reference to the above description, the following claims are put forth.

## Claims

1. Product for animal feeding, **characterized in that** it comprises a core of n-butyric acid powder and its salts covered by a lipidic structure constituted by fats, gelatines, polymers, waxes, buffer substances.

2. Product for animal feeding according to claim 1, **characterized in that** said lipidic structure is integrated with bicarbonates and/or calcium, and/or potassium, and/or magnesium carbonates.

3. Product for animal feeding according to claims 1, 2, **characterized in that** it is obtained through a spray cooling system including the dispersion of the active principle, that is, n-butyric acid and its salts, into a mainly lipidic structure brought to melting temperature, with the aid of emulsifiers and buffer agents, and the successive introduction in rapid cooling chambers, so as to obtain roundish microcapsules and microgranules.

4. Product for animal feeding according to claim 1, **characterized in that** it comprises n-butyric acid and its salts, microencapsulated to countercat, or in any case avoid the dissociation of the salts into butyric acid and the consequent exhalations that are malodorous and irritating for the operators.

5. Product for animal feeding according to claim 1, **characterized in that** n-butyric acid and its salts are microencapsulated with active principle concentrations ranging from a minimum of 0,1% to 80%.

6. Product for animal feeding according to claims 1,2 3, 4, 5, **characterized in that** it guarantees the stability of the active principle at gastric level, thus ensuring the absorption of the whole quantity administered owing to its biological effect.

7. Method for the production of animal feedingstuffs, **characterized in that** it includes the dispersion of the active principle, that is, n-butyric acid and its salts, into a mainly lipidic structure brought to melting temperature, with the aid of emulsifiers and buffer agents, as well as the successive introduction in rapid cooling chambers, so as to obtain microcapsules and microgranules.
